# EUROPEAN PATENT SPECIFICATION

(11) **EP 2 679 083 B1**
(45) Date of publication and mention of the grant of the patent: **05.08.2015**
(21) Application number: 12173872.8
(22) Date of filing: 27.06.2012
(51) Int. Cl.: A01D 34/00

(54) **Apparatus for cutting grass**
Mähvorrichtung
Tondeuse

(43) Date of publication of application: 01.01.2014
(73) Proprietor: Bernini, Fabrizio, 52021 Bucine - Arezzo (IT)
(72) Inventor: Bernini, Fabrizio, 52021 Bucine - Arezzo (IT)
(74) Representative: Tansini, Elio Fabrizio

(56) References cited:
- EP-A1- 2 082 638
- EP-A1- 2 502 482
- EP-A2- 2 413 215
- US-A1- 2011 202 307

## Description

### FIELD OF APPLICATION

The present invention relates to an apparatus for cutting grass.

### PRIOR ART

As is known, automatic lawn mowers are currently designed to operate within set cutting areas.

The lawn mowers are used to maintain lawns, gardens and grassy areas in general, in optimum conditions, i.e. to maintain the grass below a certain height in a substantially homogenous manner in the entire cutting area.

The cutting area is often bounded by a wire or perimeter cable, in which an electric signal is propagated; by detecting this electric signal the lawn mower is able to recognise the boundaries of the cutting area and to consequently regulate movement and/or cutting activities.

As is known, the lawn mowers are provided with an independent electric supplying unit that has the task of supplying electric energy to the electric devices and electromechanical devices inside the lawn mower, such as, for example, the motors intended for moving the wheels and the blades, the electronic circuits dedicated to detecting the presence of grass, to detecting the presence of the perimeter cable, to processing the detected data and to controlling the various motors, etc.

When the supplying unit, which typically consists of a battery or of a pack of batteries, is almost flat, the lawn mower goes to a recharging base, where the supplying unit can be recharged in such a manner as to enable the lawn mower to continue to operate, after a certain time.

This independent electric supplying unit enables the lawn mower to move along the cutting area, change movement direction when approaching an obstacle and/or to follow a set cutting path or return to the base.

During normal cutting operations, the lawn mower meets different types of obstacle, such as stones, unevenness in the terrain, boundary walls; each time the lawn mower meets an obstacle it has to change direction; even the recharging base can often constitute an obstacle to the passage of the lawn mower, determining an obligatory change of direction and potential damage due to the collision of the lawn mower and the base.

The lawn mower in operation is provided with blades designed for cutting grass; further, the lawn mower is normally equipped with recharging means in the front part.

It is deduced therefrom that each potential interference with cutting by a foreign body can be harmful both for the regular advance of the lawn mower and for the cutting means itself, and because of possible damage to the recharging means arranged in front of the lawn mower.

EP2502482 A1 discloses an apparatus for cutting grass, comprising a lawn mower provided with actuating means for movement of the lawn mower at least inside one cutting area; one or more blades for cutting grass in the cutting area. The apparatus further comprises: a perimetral cable confining the cutting area and comprising at least one portion having a predetermined conformation; a management device for generating an electric signal and propagating it in the cable. The lawn mower is further provided with sensor means for detecting the electric signal; a control unit configured for operating the actuating means in such a manner as to move the lawn mower inside the cutting area along a trajectory substantially in the form of arcs; an operating module configured for: determining main data representative of the conformation of the cable portion, as a function of the electric signal propagating in the portion; comparing the main data with reference data; generating a notification signal in case of correspondence between the main data and reference data. The control unit is further configured for: receiving the notification signal; following said reception, operating in a main operating condition giving commands to the actuating means in such a manner that the lawn mower will move for meeting the cable again and will then move along the cable over a predetermined length.

EP2413215 A2 discloses a robotic mower home finding system, including a charging station connected to an outer boundary wire loop; a vehicle control unit on the robotic mower that commands a traction drive system to drive the robotic mower along a path offset a specified distance parallel to an outer boundary wire loop toward the charging station, the vehicle control unit changing the specified distance each time the robotic mower returns home to the charging station.

In the light of the above, the object of the present invention is to provide an apparatus for cutting grass that is improved in terms of resistance to damage of the components thereof.

In particular, another object of the present invention is to provide an apparatus for cutting grass in which the recharging means is safeguarded as far as possible.

In particular, another object of the present invention is to provide an apparatus for cutting grass in which the cutting means is as far as possible immune to damage.

### SUMMARY OF THE INVENTION

These and other objects are achieved by an apparatus for cutting grass, according to what has been disclosed in the attached claims 1 to 14.

The invention, as disclosed, achieves the following technical effects:
- better resistance of the lawn mower components to damage;
- better safeguarded recharging means;
- more reliable recharging means;
- cutting means that is as immune as possible to damage;
- more reliable cutting means.

The aforesaid technical effects and other technical effects of the invention will be disclosed in greater detail in the description below of an embodiment that is provided by way of non-limiting example with reference to the attached drawing.

### SHORT DESCRIPTION OF THE DRAWINGS

- figure 1 shows a block diagram of an apparatus according to the invention;
- figure 1a shows a detail of figure 1;
- figure 2 shows schematically a perspective view of a lawn mower that is part of the apparatus according to the present invention;
- figure 3 shows a block diagram of a lawn mower that is part of the apparatus according to the invention;
- figure 4 shows schematically details of the apparatus in figure 1;
- figure 5 shows schematically an operating condition of the lawn mower that is part of the apparatus according to the invention;
- figure 6 shows a first inductive recharging diagram of the apparatus of the invention;
- figure 7 shows a second inductive recharging diagram of the apparatus of the invention.

### DETAILED DESCRIPTION OF THE INVENTION

With reference to the attached figures, with 100 an apparatus for cutting grass according to the invention has been indicated overall.

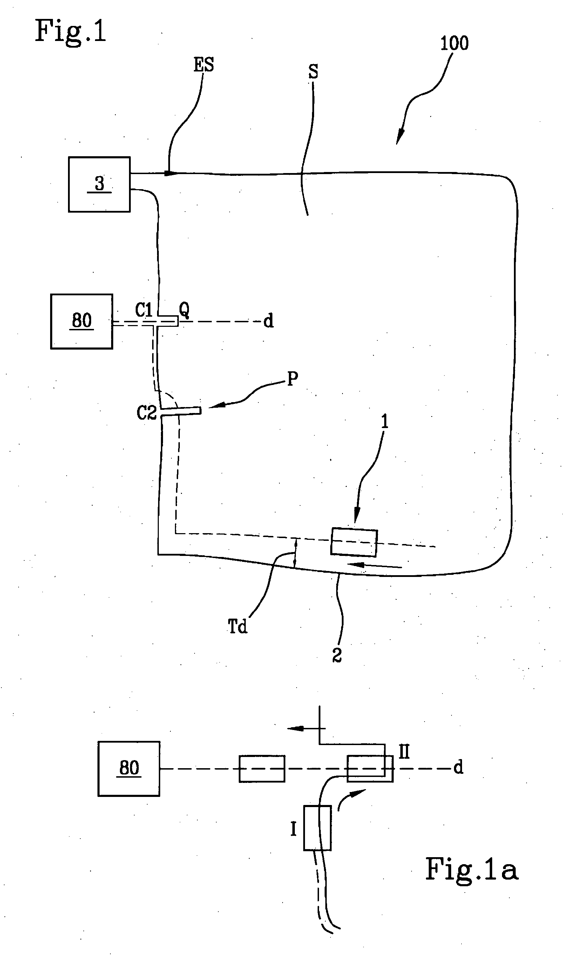

The apparatus 100 (figure 1) comprises a lawn mower 1, set up to operate at least inside a cutting area S, bounded by a perimeter cable 2.

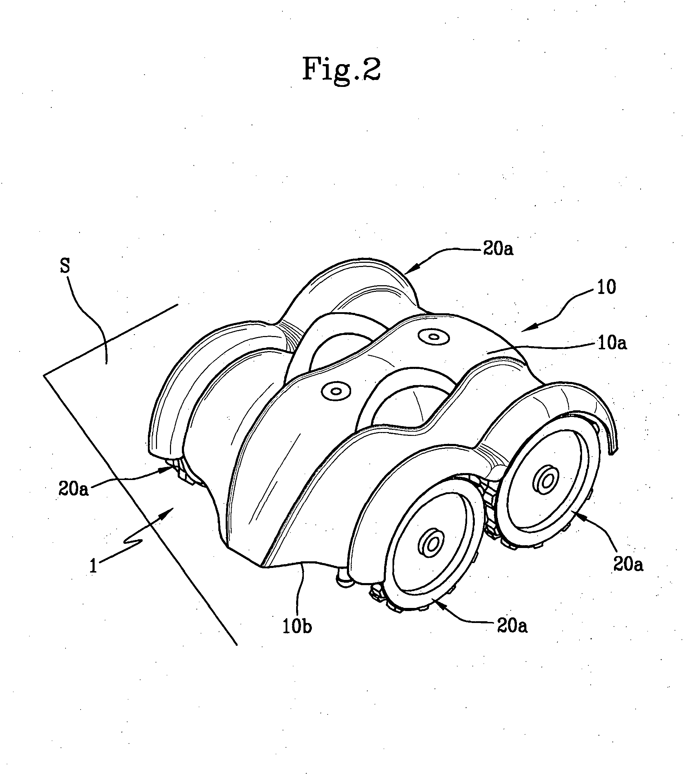

The lawn mower 1 (figures 2-3) comprises above all a frame 10; the frame 10 can comprise, for example, an upper case 10a and a lower case 10b, preferably removably associated together.

The upper case 10a and the lower case 10b can be made, for example, of plastic.

The lawn mower 1 further comprises movement means 20 mounted on the frame 10 to move the lawn mower 1 with respect to the cutting area S; the latter can be a lawn, a garden, a flowerbed, or in general any surface on which the lawn mower 1 is called to operate.

The movement means 20 preferably comprises a plurality of wheels 20a, fitted to the frame 10, and one or more motors, that are set up to rotate these wheels 20a.

By way of example, the lawn mower 1 shown in the attached figures is provided with four suitably driven wheels 20a.

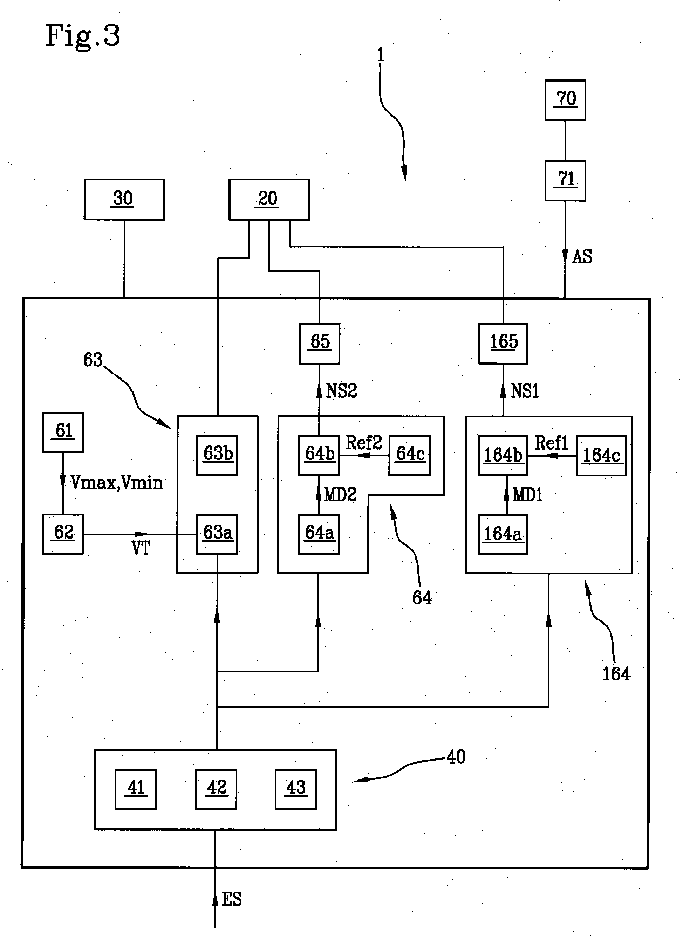

The lawn mower 1 further comprises one or more blades 30 (shown schematically in figure 3), fitted to the frame 10, to cut the grass in the cutting area S.

Advantageously, the blades 30 are moved by suitable motors housed inside the frame 10.

By way of example, the aforesaid motors can be electric motors, supplied by a battery; the latter can be of the rechargeable type.

Preferably, recharging takes place on a recharging base 80.

Advantageously, according to the invention, the recharging base 80 is positioned outside the cutting area (S).

In other words, the recharging base 80 is positioned outside the perimeter cable 2.

The technical effect determined by this feature is that the base is less "intrusive" and bulky for the lawn mower.

Further, the recharging base does not hinder the movement of the lawn mower and at the same time the recharging base cannot be damaged in any way by the blades of the lawn mower during normal cutting operations.

Preferably, the aforesaid battery can also supply a control unit (which will be disclosed below), and other electric/electronic devices provided on board the lawn mower 1.

The apparatus 100 further comprises a management device 3 (figure 1) associated with the aforesaid perimeter cable 2.

The management device 3 is configured for supplying an output electric signal ES. The management device 3 is connected to the cable 2, such that the electric signal ES is propagated in the cable 2. Preferably, the perimeter cable 2 is an electric cable.

The electric signal ES can have the shape of a sine wave, a square wave, etc. Advantageously, the lawn mower 1 further comprises a control unit 60, which has the task of managing at least partially operation of the lawn mower.

In particular, the control unit 60 comprises sensor means 40 for detecting the electric signal ES that is propagated in the cable 2.

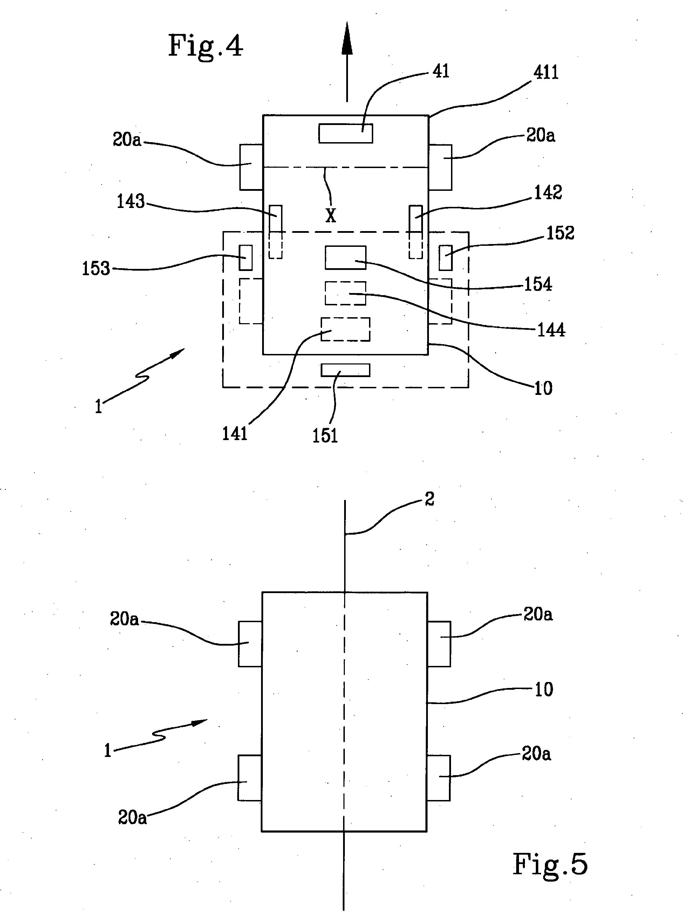

In one embodiment, the sensor means 40 can comprise a detecting element 41 (fig.4), preferably consisting of an inductive element, such as, for example a reel.

Preferably, the sensor means 40 further comprises a current reader 42 and, possibly, a current amplifier 43 designed to permit improved reading of the detected signal.

Preferably, the detecting element 41 is fitted to the frame 10 in a front position thereof. In particular, the detecting element can be advantageously positioned in front of an axis X, which ideally, or also mechanically, joins the front wheels of the lawn mower 1 (figure 4).

By virtue of the measurements made by the sensor means 40, the control unit 60 manages the movement of the lawn mower 1.

In particular, it manages an approach to the recharging base 80 by following the perimeter wire 2 until it arrives at a first portion Q of the electric cable 2, in which the first portion Q has a first conformation C1.

In order to carry out the approach, the control unit 60 further comprises a memory 61 for storing a maximum value Vmax and a minimum value Vmin for a detecting intensity of said electric signal ES.

Such maximum and minimum values Vmax, Vmin are relative to the intensity with which the sensor means 40 detects the electric signal ES.

In practice, the maximum and minimum values Vmax, Vmin can be expressed in volt. Said maximum and minimum values Vmax, Vmin are respectively representative of a minimum distance Dmin and a maximum distance Dmax of the lawn mower 1 from the perimeter cable 2.

In fact, the closer the lawn mower 1 is to the cable 2 (lesser distance), the greater will be the intensity with which the electric signal ES is detected and, vice versa, the further the lawn mower 1 is from the cable 2 (greater distance) the less will be the intensity with which the electric signal ES is detected.

The maximum and minimum values Vmax, Vmin can be advantageously detected by the lawn mower 1, by the sensor means 40, during operation of the lawn mower 1. Alternatively, these values can be set.

The control unit 60 further comprises a calculation module 62 associated with the aforesaid memory 61.

The calculation module 62 is configured for determining a target value Tv for detecting the intensity of the electric signal ES. The target value Tv is not nil and is comprised between the maximum value Vmax and the minimum value Vmin. The target value Tv is representative of a target distance Td of the lawn mower 1 with respect to the perimeter cable 2.

In practice, the calculation module 62 determines the target value Tv in such a manner as to determine correspondingly the target distance Td at which the lawn mower 1 will have to position itself in relation to the cable 2.

Conveniently, the target value Tv is substantially different from a preceding target value determined by the detecting intensity of the same electric signal ES. In practice, as will be clearer below, the target value Tv is used for defining the method with which the lawn mower 1 approaches the recharging base 80 until it detects the first portion Q of electric cable 2 having the first conformation C1. In order to perform this approach following substantially the course of the cable 2, but without passing always on the same zones or traces, the target value Tv is determined in such a manner that it takes on a different value for each work cycle, i.e. for each time in which the lawn mower 1 has to approach the recharging base 80.

In one embodiment, the target value Tv is determined in a random manner, by an algorithm that is able to generate random numbers comprised within the interval that have as limits the aforesaid maximum value Vmax and minimum value Vmin.

Preferably, the limits Vmax and/or Vmin can be excluded from the range of acceptable values.

More in general, within the interval that has Vmax, Vmin as limits a sub-interval can be selected within which the target value Tv is calculated.

In a different embodiment, the target value Tv is determined according to a set sequence of values, for example cyclically.

The control unit 60 further comprises an operating module 63 configured for controlling the movement means 20 to move the lawn mower 1 such that the sensor means 40 detects the electric signal ES at an intensity that is substantially equal to the target value Tv.

In other words, by combining the information coming from the sensor means 40 and from the calculation module 62, the operating module 63 sends appropriate control signals to the movement means 20, such that, during the movement of the lawn mower 1, the intensity with which the sensor means 40 detects the electric signal ES is substantially equal to the target value Tv.

In this manner, the lawn mower 1, whilst it approaches the recharging base 80, is maintained at a distance from the perimeter cable 2 that is substantially equal to the aforesaid target distance Td.

Going into greater detail, the operating module 63 preferably comprises a comparing module 63a configured for comparing the target value Tv with the intensity with which the electric signal ES is detected by the sensor means 40. In this manner it is possible to check whether the lawn mower 1 is moving at a correct distance (i.e. distance that is substantially equal to the target distance Td).

Preferably, the operating module 63 further comprises a control module 63b associated with the comparing module 63a and configured for controlling in a suitable manner the movement means 20 as a function of the comparison made by the comparing module 63a.

In particular:
- if the detecting intensity is less than the target value Tv, the control module 63b controls the movement means 20 such that the lawn mower 1 steers in a set direction, for example to the left.
- if the detecting intensity is greater than the target value Tv, the control module 63b controls the movement means 20 such that the lawn mower 1 steers in a direction other than said set direction, for example to the right.

The corrections to the trajectory of the lawn mower 1 made by the control module 63b are preferably minimal, i.e. they do not involve sharp or excessively angular steering. This is because, for the purposes of approaching the recharging base 80, it is not indispensable to follow an extremely precise trajectory and it is necessary to assign greater importance to other factors (e.g. the possibility of moving the lawn mower 1 at a great speed and obtaining a quick return to the recharging base 80).

Preferably, the corrections to the trajectory of the lawn mower 1 made by the control module 63b involve curves having a radius of more than 0.70 metres and in particular the same as or greater than 1 metre.

Preferably, the corrections to the trajectory of the lawn mower 1 made by the control module 63b involve curves defining angles of less than 90°, and in particular angles of less than 70°.

Preferably, the comparing module 63a repeatedly compares the intensity with which the electric signal ES is detected and the target value Tv. For example, this comparison can be made by maintaining a set interval between each comparison and the next. Said set interval can have a duration comprised between 1 second and 3 seconds. For example, this duration can be substantially equal to 2 seconds.

Preferably, the electric signal ES is detected more frequently (i.e. more often than once every two seconds), for example every 0.1 seconds. An average, for example an arithmetical average, is then made of the detected values and the result is compared with the target value Tv.

Preferably, as hinted at above, the lawn mower 1 comprises a supplying unit 70. The supplying unit can comprise, for example, one or more batteries.

The supplying unit 70 has the task of supplying electric power to the electric-electronic-electromechanical devices on the lawn mower 1.

The supplying unit 70 can be recharged at the aforesaid recharging base 80. Advantageously, a monitoring circuit 71 is associated with the supplying unit 70.

The monitoring circuit 71 is configured for monitoring the supplying unit 70, and in particular the charge level of the latter. When this level falls below a set threshold, the monitoring circuit generates an alert signal AS.

The alert signal AS is sent to the control unit 60, so that the calculation module 62 and the operating module 63 are activatable as a function of the alert signal AS.

In practice, when the monitoring circuit 71 detects that the supplying unit 70 needs to be recharged, it reports this situation to the control unit 60; the calculation module 62, for determining the target value Tv, and the operating module 63, for consequent moving of the lawn mower 1 are thus activated, such that the lawn mower 1 can approach the recharging base 80 according to what has been established by the calculation module 62.

Once the lawn mower has approached, as disclosed, the recharging base 80 to detect the first portion Q of electric cable 2 having the first conformation C1, the control unit 60 manages the return of the lawn mower to the recharging base 80.

Advantageously, according to the invention, the perimeter cable 2 has a first portion Q having a set first conformation C1.

Preferably, the first portion Q has a first conformation C1 that is concave with respect to the perimeter defined by the perimeter cable 2.

As will be clearer below, the first portion Q, when it is detected by the lawn mower 1, enables the lawn mower 1 to adapt accordingly.

Advantageously, according to the invention, the control unit 60 comprises a first recognition module 164 (fig. 3).

The first recognition module 164 is configured for recognising the aforesaid first portion Q of the perimeter cable 2.

The control unit 60 further comprises a first auxiliary module 165, configured for controlling the movement means 20 as a function of the recognition carried out by the first recognition module 164.

According to the invention, the recognition module 164 is configured for determining, as a function of the electric signal ES propagating in the first portion Q, first main data MD1 that are representative of the first conformation C1 of the first portion Q of the cable 2.

In particular, the first recognition module 164 can comprise a positioning circuit 164a connected to the sensor means 40 and configured for determining, during movement of the lawn mower 1, the position of the aforesaid detecting element 41 with respect to the cutting area S.

In practice, the positioning circuit 164a, depending on the detection of the electric signal ES by the detecting element 41, is able to determine whether the latter is at the first portion Q of the cable 2.

The aforesaid first main data MD1 can thus be determined as a function of a plurality of successive positions of the detecting element 41 with respect to the perimeter cable 2 during movement of the lawn mower 1.

In practice, the first main data MD1 can comprise first data that are representative of the fact that the detecting element 41 is at the first portion Q of the cable 2.

The first portion Q has a conformation that is such that it can be easily identified by a series of data of the type referring to the detecting element 41.

The positioning circuit 164a supplies, with substantial continuity (i.e. preferably, at a set frequency) data that are representative of the position of the detecting element 41; in this sense first main data MD1 are to be considered to be representative of the first conformation C1 of the first portion Q of the perimeter cable 2, and as a function of these data it is thus possible to determine the presence of the first portion Q.

In greater detail, the first recognition module 164 further comprises a comparison circuit 164b configured for comparing the first main data MD1 with first pre-stored reference data Ref1.

The first reference data Ref1, which are stored in an appropriate first memory register 164c, are representative of the first reference conformation C1.

In practice, the first reference data Ref1 are representative of the first conformation C1 of the first portion Q, stored beforehand in the lawn mower 1, such that the latter, and in particular the first recognition module 164, can recognise the first conformation C1 when it is detected by the sensor means 40.

By way of example, the first reference data Ref1 can comprise, in succession, data that are representative of the fact that the detecting element 41 is outside the cutting area S for a first path, and data that are representative of the fact that the detecting element 41 is inside the cutting area S for a second path after the first path.

In one embodiment, the detection by the sensor means 40 can be discrete, and be conducted at a set frequency (e.g. once every 0.1 seconds). Then, inside the first reference data Ref1, the data that are representative of the fact that the detecting element 41 is inside the cutting area S can consist of a certain number of discrete measurements in this sense (for example, twenty measurements).

Similarly, the data that are representative of the fact that the detecting element 41 is then outside the cutting area S can consist of a certain number of measurements in this sense (for example, five measurements).

When the first recognition module 164, and in particular the first comparison circuit 164b, establishes that there is a substantial correspondence between the first main data MD1 and the first reference data Ref1, a first notification signal NS1 is generated.

The first notification signal NS1 is thus indicative of the fact that the lawn mower 1 is at the first portion Q of the perimeter cable 2.

The first notification signal NS1 is directed to the aforesaid first auxiliary module 165 so that the latter can control the movement means 20 in such a manner that the lawn mower 1 returns to the recharging base 80.

In particular, the first auxiliary module 165, associated with the first recognition module 164, is configured for receiving the first notification signal NS1.

With reference to figure 1a, the first auxiliary module 165 is further configured for controlling the movement means 20, following reception of this signal, such that the lawn mower 1, from a first position I near the first portion Q, is arranged in a direction d that is transverse to the cable 2 with a front part 411 facing the cutting area S; this latter position is indicated with II in figure 1 a.

For completeness, with reference to figure 4, the front part 411 of the lawn mower 1 is defined as the part of the lawn mower in the lawn mower advancing direction. Preferably, the lawn mower in the first position I near the first portion Q is substantially aligned on the perimeter cable 2.

The first auxiliary module 165 is further configured for controlling the movement means 20 in such a manner as to make the lawn mower reverses along the direction d until it meets the recharging base 80.

In other words, the lawn mower reverses into the recharging base 80.

Advantageously, according to the invention, the lawn mower 1 comprises first recharging means 141 in the rear part thereof and the recharging base 80 comprises corresponding second recharging means 151 facing the first recharging means 141. The first 141 and second 151 means are configured for an operational coupling in the recharging base 80 during a recharging step.

Alternatively, or in addition, according to the invention, the lawn mower 1 comprises third recharging means 142, 143 on the lateral sides thereof (fig. 4) and the recharging base 80 comprises corresponding fourth recharging means 152,153, facing the third recharging means 142, 143.

The third 142,143 and fourth 152,153 recharging means are configured for an operational coupling in the recharging base 80 during a recharging step.

Alternatively, or in addition, according to the invention, the lawn mower 1 comprises fifth recharging means 144 on the upper part of the frame (fig. 4) and the recharging base 80 comprises corresponding sixth recharging means 154 facing the fifth recharging means 144.

The fifth 144 and sixth 154 recharging means are configured for operational coupling in the recharging base 80 during a recharging step.

The technical effect guaranteed by not positioning the recharging means in the front is the greater integrity of this means as such means is not potentially at risk from damage when the lawn mower meets obstacles during the advancement motion along its cutting path.

In one embodiment of the invention, the recharging means comprises sliding contacts. In one embodiment of the invention, the recharging means is configured for a recharge by electric coupling, in particular of inductive type.

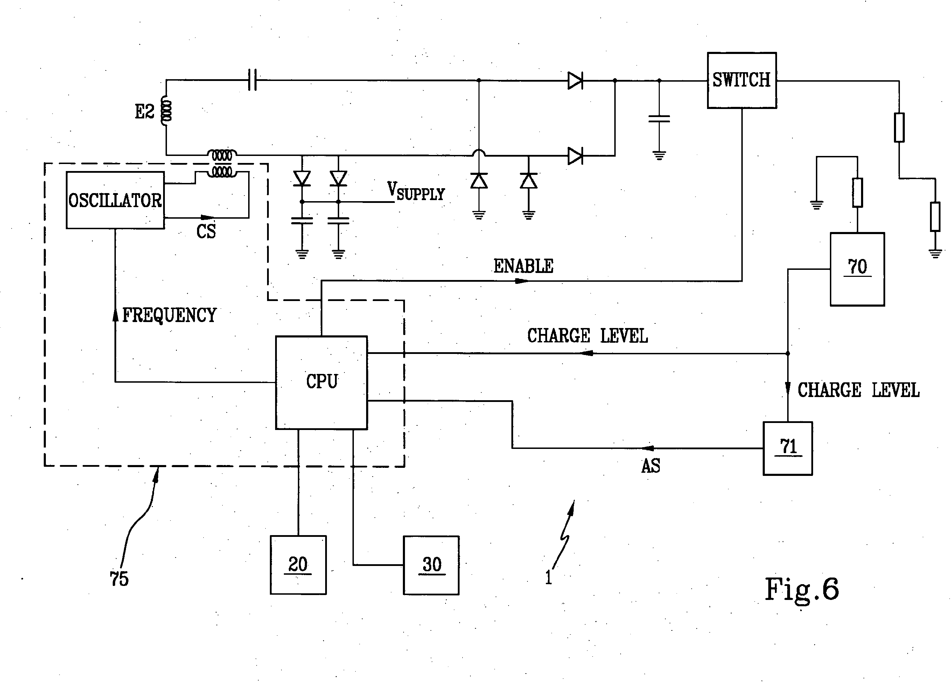

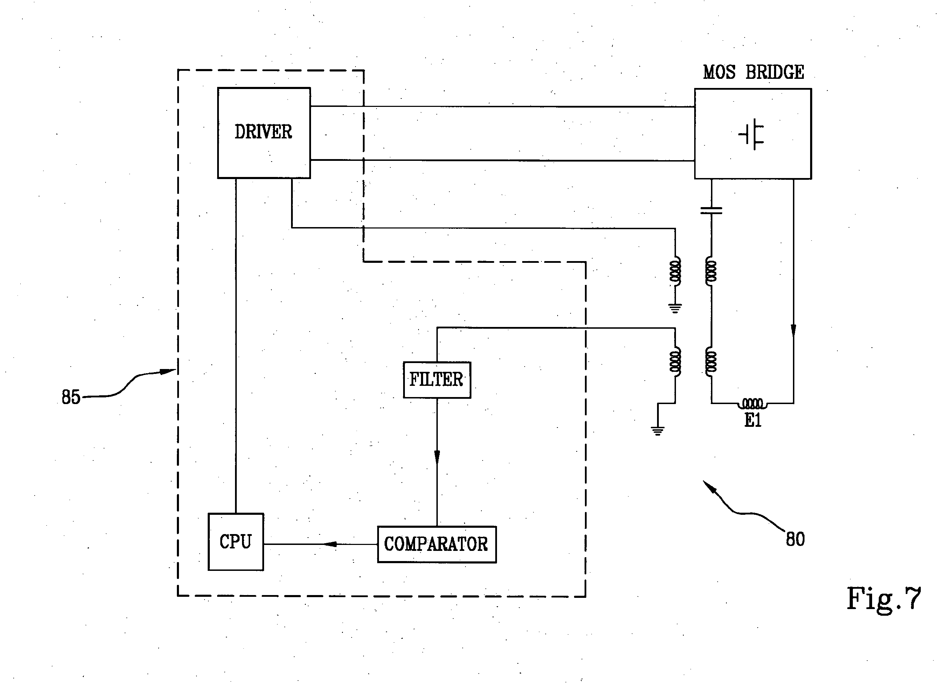

More precisely, with reference to figures 6 and 7, the recharging base 80 comprises at least one first inductive element E1, and a first control unit 85 associated with the first inductive element E1 and configured for running a determined current Ic in the first inductive element E1.

The lawn mower 1 comprises a second inductive element E2 associated with the supplying unit 70 and couplable with the first inductive element E1 for a recharge of the supplying unit 70.

The lawn mower 1 comprises a second control unit 75 configured for:
- generating a charge signal CS representing a charge level of the supplying unit 70;
- transmitting the charge signal CS to the first inductive element E1 by means of the second inductive element E2.

The first control unit 85 is configured for:
- receiving the charge signal CS via the first inductive element E1;
- adjusting the current Ic as a function of the charge signal CS.

In one embodiment, the perimeter cable 2 has a second portion P having a set second conformation C2.

The second portion P is shown schematically and by way of example shown in figure 1.

Preferably, the second portion P has a concave conformation with respect to the perimeter defined by the perimeter cable 2.

In particular, the second portion P has a substantially U-shaped conformation C2, such as to form a sort of recess of the perimeter of the cutting area S facing the interior of the cutting area S.

In one embodiment, the second portion P can have a substantially square second conformation C2, which is similar to the conformation defined by three sides of a rectangle (two larger sides and a lesser side).

Part of cable 2 immediately adjacent to portion P) can be comprised between 3 cm and 10 cm.

The second portion P, like the first portion Q, is useful because when it is detected by the lawn mower 1, it enables the lawn mower 1 to adapt accordingly.

Advantageously, the control unit 60 comprises a recognition module 64, which is suitable for recognising the aforesaid second portion P of the perimeter cable 2, and a second auxiliary module 65 that is suitable for controlling the movement means 20 as a function of the recognition carried out by the second recognition module 64.

In greater detail, the second recognition module 64 is configured for determining, as a function of the electric signal ES propagating in the second portion P and detected by the sensor means 40, second main data MD2 that are representative of the second conformation C2 of this second portion P of the cable 2.

In particular, the second recognition module 64 can comprise a second positioning circuit 64a connected to the sensor means 40 and configured for determining, during movement of the lawn mower 1, the position of the aforesaid detecting element 41 with respect to the cutting area S.

In practice, the second positioning circuit 64a, as a function of the detection of the electric signal ES by the detecting element 41, is able to determine whether the latter is inside or outside the cutting area S.

The aforesaid main data MD can then be determined as a function of a plurality of successive positions of the detecting element 41 with respect to the perimeter cable 2 during movement of the lawn mower 1.

In practice, the main data MD can comprise first data, representing the fact that the detecting element 41 is inside the cutting area S, and second data that are representative of the fact that the detecting element 41 is outside the cutting area S.

The portion P has a conformation that is such that the portion P can be easily identified by a succession of data of the "inside/outside" type referring to the detecting element 41.

The second positioning circuit 64a supplies, with substantial continuity (i.e. preferably, at a set frequency) data that are representative of the position of the detecting element 41; in this sense the second main data MD2 are to be considered representative of the conformation of the second portion P of the perimeter cable 2, and as a function of this data it is thus possible to determine the presence of the second portion P.

In greater detail, the second recognition module 64 further comprises a second comparison circuit 64b configured for comparing the second main data MD2 with second pre-stored reference data Ref2; the second reference data Ref2, which are stored in a suitable second memory register 64c, are representative of a second reference conformation C2.

In practice, the second reference data Ref2 are representative of the conformation C2 of the portion P, stored beforehand in the lawn mower 1, such that the latter, and in particular the second recognition module 64, can recognise the conformation C2 of the portion P when it comes.

When the second recognition module 64, and in particular the second comparison circuit 64b, establishes that there is a substantial correspondence between the second main data MD2 and the second reference data Ref2, a second notification signal NS2 is generated.

The second notification signal NS2 is thus indicative of the fact that the lawn mower 1 is at the second portion P of the perimeter cable 2.

The second notification signal NS2 is directed at the aforesaid second auxiliary module 65 such that the latter can control movement means 20 such that the lawn mower 1 follows the perimeter cable 2 at a substantially nil distance therefrom.

The operating module 63, which was operating in such a manner as to maintain the lawn mower 1 at the target distance Td from the perimeter cable 2, interrupts this operating mode, such that the second auxiliary module 65 can act in such a manner that the lawn mower 1 is substantially in a superimposed condition with the perimeter cable 2.

For this purpose, the second auxiliary module 65 controls the movement means 20 such that the lawn mower 1 moves to meet the cable 2 again and then moves by following the cable 2.

The invention achieves important advantages.

The main components, i.e. lawn mower and base, are less vulnerable to damage as they can come into contact only during recharging.

For the same reason, the recharging means is better safeguarded and is consequently more reliable.

These advantages also apply to the blades.

## Claims

1. Apparatus for cutting grass comprising:
• a lawn mower (1) provided with:
∘ movement means (20) for moving said lawn mower (1) at least inside a cutting area (S);
∘ one or more blades (30) for cutting grass in said cutting area (S);
• a perimeter cable (2), bounding said cutting area (S), wherein said perimeter cable has at least one first portion (Q) having a first set conformation (C1);
• a management device (3) for generating an electric signal (ES) and propagating the electric signal (ES) in said cable (2);
• a recharging base (80) for said lawn mower (1) positioned outside said cutting area (S);
said lawn mower (1) further comprising a control unit (60) provided with:
∘ sensor means (40) configured for detecting said electric signal (ES);
∘ a recognition module (164) configured for:
▪ determining, as a function of said electric signal (ES) propagating in said first portion (Q), first main data (MD1) that are representative of the first conformation (C1) of said first portion (Q) of the cable (2);
▪ comparing said first main data (MD1) with said first pre-stored reference data (Ref1) that are representative of a first reference conformation (C1);
▪ generating a first notification signal (NS1) in case of correspondence between said first main data (MD1) and said first reference data (Ref1);
▪ a first auxiliary module (165) associated with said first recognition module (164) and configured for:
• receiving said first notification signal (NS 1);
• controlling said movement means (20), following reception of said first notification signal (NS1), such that said lawn mower (1) is arranged in a direction (d) that is transverse to said cable (2) with a front part (411) facing said cutting area (S), starting from a first position (I) near said first portion (Q);
• returning the lawn mower along the direction (d) until the lawn mower meets the recharging base (80).
wherein:
• said lawn mower (1) comprises first recharging means (141) in the rear part thereof;
• said recharging base (80) comprises corresponding second recharging means (151) facing said first recharging means (141),
said first (141) and second (151) means being configured for an operational coupling in the recharging base (80) during a recharging step.

2. Apparatus according to claim 1 wherein said first auxiliary module (165) associated with said first recognition module (164) is configured for
• moving in reverse gear the lawn mower along the direction (d) until the lawn mower meets the recharging base (80).

3. Apparatus according to any one of claims 1 or 2 wherein:
• said lawn mower (1) comprises third recharging means (142, 143) on the lateral sides thereof;
• said recharging base (80) comprises corresponding fourth recharging means (152, 153) facing said third recharging means (142, 143);
said third (142, 143) and fourth (152, 153) recharging means being configured for an operational coupling in the recharging base (80) during a recharging step.

4. Apparatus according to any one of claims 1 to 3 wherein:
• said lawn mower (1) comprises fifth recharging means (144) on an upper part of the frame;
• said recharging base (80) comprises corresponding sixth recharging means (154) facing the fifth recharging means (144);
said fifth (144) and sixth (154) recharging means being configured for an operational coupling in the recharging base (80) during a recharging step.

5. Apparatus according to any one of claims 2 to 4, wherein said recharging means ( 141, 142, 143, 144, 151, 152, 153, 154) is configured for a recharge by inductive electric coupling.

6. Apparatus according to claim 5 wherein:
• said recharging base (80) comprises at least one first inductive element (E1), and a first control unit (85) associated with said first inductive element (E1) and configured for running in said first inductive element (E1) a set current (I);
• said lawn mower (1) comprises a second inductive element (E2) associated with said supplying unit (70) and couplable with said first inductive element (E1) for a recharge of said supplying unit (70), and a second control unit (75),
wherein said second control unit (75) is configured for;
∘ generating a charge signal (CS) representing a charge level of said supplying unit (70);
∘ transmitting said charge signal (CS) to said first inductive element (E1) by said second inductive element (E2);
wherein said first control unit (85) is configured for:
∘ receiving said charge signal (CS) by said first inductive element (E1);
∘ regulating said current (I) as a function of said charge signal (CS).

7. Apparatus according to any one of claims 1 to 6 wherein said control unit (60) further comprises:
• a memory (61) for storing a maximum value (Vmax) and a minimum value (Vmin) for a detecting intensity of said electric signal (ES), said maximum and minimum values (Vmax, Vmin) representing respectively a minimum distance (Dmin) and a maximum distance (Dmax) of said lawn mower (1) from said perimeter cable (2);
• a calculation module (62) configured for determining, for said detecting intensity, a target value (Tv), that is not nil and is comprised between said maximum value (Vmax) and said minimum value (Vmin), said target value (Tv) being representative of a target distance (Td) of said lawn mower (1) with respect to said perimeter cable (2), said target value (Tv) being substantially different from a preceding target value determined for said detecting intensity;
• an operating module (63) configured for controlling said movement means (20) to move said lawn mower (1) such that said sensor means (40) detects said electric signal (ES) at an intensity that is substantially equal to said target value (Tv), maintaining said lawn mower (1) at a distance, with respect to said perimeter cable (2), substantially equal to said target distance (Td) in a movement of said lawn mower (1) to said recharging base (80).

8. Apparatus according to claim 7 wherein said calculation module (62) is configured for determining said target value (Tv) in a random manner.

9. Apparatus according to claim 7 or 8 wherein said calculation module (62) is configured for determining said target value (Tv) as a function of a set sequence of values.

10. Apparatus according to any one of preceding claims 7 to 9 wherein said preceding target value is a target value used for a preceding return to said recharging base (80) of said lawn mower (1).

11. Apparatus according to any one of preceding claims 7 to 10 wherein said operating module (63) comprises:
- a comparing module (63a) configured for comparing said target value (Tv) with the intensity with which said electric signal (ES) is detected by said sensor means (40);
- a control module (63b) associated with said comparing module (63a) and configured for:
• controlling said movement means (20) such that said lawn mower (1) steers in a set direction, for example to the left, if said detected intensity is less than said target value (Tv);
• controlling said movement means (20) such that said lawn mower (1) steers in a direction other than said set direction, for example to the right, if said detected intensity is greater than said target value (Tv).

12. Apparatus according to claim 11 wherein said comparing module (63a) is configured for making said comparison repeatedly, preferably maintaining, between one comparison and the next, an interval comprised between 1s and 3 s.

13. Apparatus according to claim 11 or 12 wherein steering controlled by said control module (63b) has a curvature radius of more than 0.70 metres and/or defines angles of less than 90°.

14. Apparatus according to any one of preceding claims 7 to 13 wherein said lawn mower (1) further comprises:
- a supplying unit (70);
- a monitoring circuit (71) for monitoring said supplying unit (70) and generating an alert signal (AS) when the charge of said supplying unit (70) falls below a set threshold; said control unit (60) being associated with said monitoring circuit (71) such that said calculation module (62) and said operating module (63) are activatable as a function of said alert signal (AS).

## Patentansprüche

1. Mähvorrichtung, umfassend:
• einen Rasenmäher (1), versehen mit:
∘ Bewegungsmitteln (20) zum Bewegen des Rasenmähers (1) mindestens in einem Schneidbereich (S);
∘ einem oder mehreren Messern (30) zum Schneiden von Gras in diesem Schneidbereich (S) ;
• ein umlaufendes Kabel (2), das den Schneidbereich (S) abgrenzt, wobei das umlaufende Kabel mindestens einen ersten Abschnitt (Q), aufweisend eine erste eingestellte Beschaffenheit (C1), aufweist;
• eine Handhabungsvorrichtung (3) zum Erzeugen eines elektrischen Signals (ES) und zur Verbreitung des elektrischen Signals (ES) im Kabel (2);
• eine Aufladestation (80) für den Rasenmäher (1), positioniert außerhalb des Schneidbereichs (S) ;
wobei der Rasenmäher (1) zudem eine Steuereinheit (60) umfasst, versehen mit:
∘ Sensormitteln (40), die ausgelegt sind, um das elektrische Signal (ES) zu erfassen;
∘ einem Erkennungsmodul (164), das ausgelegt ist, um
• erste Hauptdaten (MD1), die repräsentativ für die erste Beschaffenheit (C1) des Abschnitts (Q) des Kabels (2) sind, als eine Funktion des elektrischen Signals (ES), das sich im ersten Abschnitt (Q) verbreitet, zu ermitteln;
• diese ersten Hauptdaten (MD1) mit den ersten vorgespeicherten Referenzdaten (Ref1) zu vergleichen, die repräsentativ für eine erste Referenzbeschaffenheit (C1) sind;
• ein erstes Meldesignal (NS1) bei Übereinstimmung zwischen den Hauptdaten (MD1) und den ersten Referenzdaten (Ref1) zu generieren;
• einem ersten Hilfsmodul (165), verbunden mit dem ersten Erkennungsmodul (164) und ausgelegt, um
• das erste Meldesignal (NS1) zu empfangen;
• die Bewegungsmittel (20) nach dem Empfang des ersten Meldesignals (NS1) zu steuern, sodass der Rasenmäher (1) in einer Richtung (d) angeordnet wird, die quer zum Kabel (2) verläuft, wobei ein frontseitiger Teil (411) dem Schneidbereich (S) zugewandt ist, ausgehend von einer ersten Startposition (I) in der Nähe des ersten Abschnitts (Q);
• den Rasenmäher entlang der Richtung (d) zurückzufahren, bis der Rasenmäher auf die Aufladestation (80) trifft, wobei
• der Rasenmäher (1) erste Auflademittel (141) in seinem hinteren Teil umfasst;
• die Aufladestation (80) entsprechende zweite Auflademittel (151) umfasst, die den ersten Auflademitteln (141) zugewandt sind;
wobei die ersten (141) und die zweiten (151) Mittel für eine betriebswirksame Kupplung in der Aufladestation (80) während eines Aufladeschritts ausgelegt sind.

2. Vorrichtung nach Anspruch 1, wobei das erste Hilfsmodul (165), verbunden mit dem ersten Erkennungsmodul (164), ausgelegt ist, um
• den Rasenmäher im Rückwärtsgang entlang der Richtung (d) zu bewegen, bis der Rasenmäher auf die Aufladestation (80) trifft.

3. Vorrichtung nach einem der Ansprüche 1 oder 2, wobei
• der Rasenmäher (1) dritte Auflademittel (142, 143) an seinen seitlichen Seiten umfasst;
• die Aufladestation (80) entsprechende vierte Auflademittel (152, 153) umfasst, die den dritten Auflademitteln (142, 143) zugewandt sind;
die dritten (142, 143) und vierten (152, 153) Auflademittel für eine betriebswirksame Kupplung in der Aufladestation (80) während eines Aufladeschritts ausgelegt sind.

4. Vorrichtung nach einem der Ansprüche 1 bis 3, wobei
• der Rasenmäher (1) fünfte Auflademittel (144) an einem oberseitigen Teil des Rahmens umfasst;
• die Aufladestation (80) entsprechende sechste Auflademittel (154) umfasst, die den fünften Auflademitteln (144) zugewandt sind;
die fünften (144) und sechsten (154) Auflademittel für eine betriebswirksame Kupplung in der Aufladestation (80) während eines Aufladeschritts ausgelegt sind.

5. Vorrichtung nach einem der Ansprüche 2 bis 4, wobei die Auflademittel (141, 142, 143, 144, 151, 152, 153, 154) für eine Aufladung durch induktive elektrische Kupplung ausgelegt sind.

6. Vorrichtung nach Anspruch 5, wobei
• die Aufladestation (80) mindestens ein erstes induktives Element (E1) und eine erste Steuereinheit (85) umfasst, verbunden mit dem ersten induktiven Element (E1) und ausgelegt, um im ersten induktiven Element (E1) einen vorgegebenen Strom (I) strömen zu lassen;
• der Rasenmäher (1) ein zweites induktives Element (E2), das mit der Stromversorgungseinheit (70) verbunden und zum Aufladen der Stromversorgungseinheit (70) mit dem ersten induktiven Element (E1) verkuppelbar ist, und eine zweite Steuereinheit (75) umfasst;
wobei die zweite Steuereinheit (75) ausgelegt ist, um
∘ ein Ladesignal (CS) zu generieren, darstellend einen Ladezustand der Stromversorgungseinheit (70);
∘ dieses Ladesignal (CS) durch das zweite induktive Element (E2) an das erste induktive Element (E1) zu übertragen;
wobei die erste Steuereinheit (85) ausgelegt ist, um
∘ das Ladesignal (CS) durch das erste induktive Element (E1) zu empfangen;
∘ den Strom (I) als eine Funktion des Ladesignals (CS) zu regeln.

7. Vorrichtung nach einem der Ansprüche 1 bis 6, wobei die Steuereinheit (60) zudem umfasst:
• einen Speicher (61) zum Speichern eines maximalen Werts (Vmax) und eines minimalen Werts (Vmin) für eine Erfassungsstärke des elektrischen Signals (ES), wobei der maximale und der minimale Wert (Vmax, Vmin) jeweils einen Mindestabstand (Dmin) und einen Höchstabstand (Dmax) des Rasenmähers (1) vom umlaufenden Kabel (2) darstellen;
• ein Berechnungsmodul (62), das ausgelegt ist, um für die Erfassungsstärke einen Zielwert (Tv) zu definieren, der nicht null ist und zwischen dem maximalen Wert (Vmax) und dem minimalen Wert (Vmin) enthalten ist, wobei der Zielwert (Tv) repräsentativ für einen Zielabstand (Td) des Rasenmähers (1) vom umlaufenden Kabel (2) ist, wobei der Zielwert (Tv) sich im Wesentlichen von einem vorhergehenden Zielwert unterscheidet, der für die Erfassungsstärke ermittelt wurde;
• ein Betriebsmodul (63), ausgelegt zur Steuerung der Bewegungsmittel (20) zur Bewegung des Rasenmähers (1), sodass die Sensormittel (40) das elektrische Signal (ES) bei einer Stärke erfassen, die im Wesentlichen gleich dem Zielwert (Tv) ist, wobei der Rasenmäher (1) dabei auf einem Abstand zum umlaufenden Kabel (2) beibehalten wird, der im Wesentlichen gleich dem Zielabstand (Td) bei der Bewegung des Rasenmähers (1) zur Aufladestation (80) ist.

8. Vorrichtung nach Anspruch 7, wobei das Berechnungsmodul (62) ausgelegt ist, um den Zielwert (Tv) nach dem Zufallsprinzip zu ermitteln.

9. Vorrichtung nach Anspruch 7 oder 8, wobei das Berechnungsmodul (62) ausgelegt ist, um den Zielwert (Tv) als eine Funktion einer vorgegebenen Wertefolge zu ermitteln.

10. Vorrichtung nach einem der vorhergehenden Ansprüche 7 bis 9, wobei es sich beim Zielwert um einen Zielwert handelt, der für ein vorhergehendes erneutes Zurückfahren des Rasenmähers (1) zur Aufladestation (80) herangezogen wird.

11. Vorrichtung nach einem der vorhergehenden Ansprüche 7 bis 10, wobei das Betriebsmodul (63) umfasst:
- ein Vergleichsmodul (63a), das ausgelegt ist, um den Zielwert (Tv) mit der Stärke zu vergleichen, mit der das elektrische Signal (ES) von den Sensormitteln (40) erfasst wird;
- ein Steuermodul (63b), das mit dem Vergleichsmodul (63a) verbunden und ausgelegt ist, um
• die Bewegungsmittel (20) so zu steuern, dass der Rasenmäher (1) in eine vorgegebene Richtung lenkt, zum Beispiel nach links, wenn die erfasste Stärke geringer ist als der Zielwert (Tv);
• die Bewegungsmittel (20) so zu steuern, dass der Rasenmäher (1) in eine bestimmte Richtung lenkt, die sich von der vorgegebenen Richtung unterscheidet, zum Beispiel nach rechts, wenn die erfasste Stärke größer ist als der Zielwert (Tv).

12. Vorrichtung nach Anspruch 11, wobei das Vergleichsmodul (63a) ausgelegt ist, um den Vergleich wiederholt auszuführen, vorzugsweise unter Beibehaltung eines Intervalls zwischen einem Bereich von 1 bis 3 Sek. zwischen den einzelnen Vergleichen.

13. Vorrichtung nach Anspruch 11 oder 12, wobei die vom Steuermodul (63b) gesteuerten Lenkungen einen Kurvenradius aufweisen, der größer als 0,70 m ist und/oder Winkel von weniger als 90° definiert.

14. Vorrichtung nach einem der vorhergehenden Ansprüche 7 bis 13, wobei der Rasenmäher (1) zudem umfasst:
- eine Stromversorgungseinheit (70);
- einen Überwachungskreis (71) zur Überwachung der Stromversorgungseinheit (70) und zum Erzeugen eines Warnsignals (AS), wenn die Ladung der Stromversorgungseinheit (70) unter eine vorgegebene Schwelle fällt, wobei die Steuereinheit (60) mit dem Überwachungskreis (71) verbunden ist, sodass das Berechnungsmodul (62) und das Betriebsmodul (63) als eine Funktion des Warnsignals (AS) aktiviert werden können.

## Revendications

1. Appareil destiné à couper du gazon, comprenant :
• une tondeuse à gazon (1) équipée :
∘ de moyens de déplacement (20) servant à déplacer ladite tondeuse à gazon (1) au moins à l'intérieur d'une zone de coupe (S) ;
∘ d'une ou plusieurs lames (30) servant à couper le gazon dans ladite zone de coupe (S) ;
• un câble périmétral (2), délimitant ladite zone de coupe (S), dans lequel ledit câble périmétral possède au moins une première portion (Q) ayant une première forme déterminée (C1) ;
• un dispositif de gestion (3) servant à générer un signal électrique (ES) et à propager le signal électrique (ES) dans ledit câble (2) ;
• une base de recharge (80) destinée à ladite tondeuse à gazon (1) positionnée à l'extérieur de ladite zone de coupe (S) ;
ladite tondeuse à gazon (1) comprenant de plus une unité de commande (60) pourvue :
∘ de moyens de détection (40) configurés pour détecter ledit signal électrique (ES) ;
∘ d'un module de reconnaissance (164) configuré pour :
▪ déterminer en fonction dudit signal électrique (ES) se propageant dans ladite première portion (Q), des premières données principales (MD1) étant représentatives de la première forme (C1) de ladite première portion (Q) du câble (2) ;
▪ comparer lesdites premières données principales (MD1) avec lesdites premières données de référence pré-mémorisées (Ref1) qui sont représentatives d'une première forme de référence (C1) ;
▪ générer un premier signal de notification (NS1) en cas de correspondance entre lesdites premières données principales (MD1) et lesdites premières données de référence (Ref1) ;
▪ un premier module auxiliaire (165) associé au dit premier module de reconnaissance (164) et configuré pour :
• recevoir ledit premier signal de notification (NS1) ;
• commander lesdits moyens de déplacement (20), suite à la réception dudit premier signal de notification (NS1), de sorte que ladite tondeuse à gazon (1) soit disposée dans une direction (d) étant transversale au dit câble (2) avec une partie antérieure (411) orientée vers ladite zone de coupe (S) commençant à partir d'une première position (I) à proximité de ladite première portion (Q) ;
• faire revenir la tondeuse à gazon le long de la direction (d) jusqu'à ce qu'elle rencontre la base de recharge (80),
dans lequel :
• ladite tondeuse à gazon (1) comprend des premiers moyens de recharge (141) situés dans sa partie arrière ;
• ladite base de recharge (80) comprend des seconds moyens de recharge correspondants (151) situés face auxdits premiers moyens de recharge (141), lesdits premier (141) et second (151) moyens étant configurés pour un couplage fonctionnel dans la base de recharge (80) lors d'une étape de recharge.

2. Appareil selon la revendication 1, dans lequel ledit premier module auxiliaire (165) associé au dit premier module de reconnaissance (164) est configuré pour
• faire déplacer en marche arrière la tondeuse à gazon le long de la direction (d) jusqu'à ce qu'elle rencontre la base de recharge (80).

3. Appareil selon l'une quelconque des revendications 1 ou 2, dans lequel :
• ladite tondeuse à gazon (1) comprend des troisièmes moyens de recharge (142, 143) situés sur ses côtés latéraux ;
• ladite base de recharge (80) comprend des quatrièmes moyens de recharge correspondants (152, 153) situés face auxdits troisièmes moyens de recharge (142, 143) ;
lesdits troisième (142, 143) et quatrième (152, 153) moyens de recharge étant configurés pour un couplage fonctionnel dans la base de recharge (80) lors d'une étape de recharge.

4. Appareil selon l'une quelconque des revendications de 1 à 3, dans lequel :
• ladite tondeuse à gazon (1) comprend des cinquièmes moyens de recharge (144) situés sur une partie supérieure du châssis ;
• ladite base de recharge (80) comprend des sixièmes moyens de recharge correspondants (154) situés face aux cinquièmes moyens de recharge (144) ;
lesdits cinquième (144) et sixième (154) moyens de recharge étant configurés pour un couplage fonctionnel dans la base de recharge (80) lors d'une étape de recharge.

5. Appareil selon l'une quelconque des revendications de 2 à 4, dans lequel lesdits moyens de recharge (141, 142, 143, 144, 151, 152, 153, 154) sont configurés pour une recharge par l'intermédiaire d'un couplage inductif électrique.

6. Appareil selon la revendication 5, dans lequel :
• ladite base de recharge (80) comprend au moins un premier élément inductif (B1) et une première unité de commande (85) associée au dit premier élément inductif (E1) et configurée pour faire circuler dans ledit premier élément inductif (E1) un courant déterminé (1) ;
• ladite tondeuse à gazon (1) comprend un second élément inductif (E2), associé à ladite unité d'alimentation (70) et pouvant être couplé au dit premier élément inductif (E1) pour un rechargement de ladite unité d'alimentation (70), ainsi qu'une seconde unité de commande (75) ;
dans lequel ladite seconde unité de commande (75) est configurée pour :
∘ générer un signal de charge (CS) représentant un niveau de charge de ladite unité d'alimentation (70) ;
∘ transmettre ledit signal de charge (CS) au dit premier élément inductif (E1) par le biais dudit second élément inductif (E2) ;
dans lequel ladite seconde unité de commande (85) est configurée pour :
∘ recevoir ledit signal de charge (CS) par le biais dudit premier élément inductif (E1) ;
∘ régler ledit courant (I) en fonction dudit signal de charge (CS).

7. Appareil selon l'une quelconque des revendications de 1 à 6, dans lequel ladite unité de commande (60) comprend de plus :
• une mémoire (61) servant à stocker une valeur maximale (Vmax) et une valeur minimale (Vmin) pour une intensité de détection dudit signal électrique (ES), lesdites valeurs maximale et minimale (Vmax, Vmin) représentant respectivement une distance minimale (Dmin) et une distance maximale (Dmax) de ladite tondeuse à gazon (1) à partir dudit câble périmétral (2) ;
• un module de calcul (62) configuré pour déterminer, pour ladite intensité de détection, une valeur cible (Tv) non nulle et comprise entre ladite valeur maximale (Vmax) et ladite valeur minimale (Vmin), ladite valeur cible (Tv) étant représentative d'une distance cible (Td) de ladite tondeuse à gazon (1) par rapport au dit câble périmétral (2), ladite valeur cible (Tv) étant substantiellement différente d'une valeur cible précédente déterminée pour ladite intensité de détection ;
• un module de fonctionnement (63) configuré pour commander lesdits moyens de déplacement (20) pour déplacer ladite tondeuse à gazon (1) de sorte que lesdits moyens de détection (40) détectent ledit signal électrique (ES) à une intensité étant substantiellement égale à ladite valeur cible (Tv), en maintenant ladite tondeuse à gazon (1) à une distance, par rapport au dit câble périmétral (2), substantiellement égale à ladite distance cible (Td) lors d'un déplacement de ladite tondeuse à gazon (1) vers ladite base de recharge (80).

8. Appareil selon la revendication 7, dans lequel ledit module de calcul (62) est configuré pour déterminer ladite valeur cible (Tv) de façon aléatoire.

9. Appareil selon les revendications 7 ou 8, dans lequel ledit module de calcul (62) est configuré pour déterminer ladite valeur cible (Tv) en fonction d'une séquence déterminée de valeurs.

10. Appareil selon l'une quelconque des revendications de 7 à 9, dans lequel ladite valeur cible qui précède est une valeur cible utilisée pour une réentrée précédente de ladite tondeuse à gazon (1) à ladite base de recharge (80).

11. Appareil selon l'une quelconque des revendications de 7 à 10, dans lequel ledit module de fonctionnement (63) comprend :
- un module de comparaison (63a) configuré pour comparer ladite valeur cible (Tv) avec l'intensité avec laquelle ledit signal électrique (ES) est détecté par lesdits moyens de détection (40) ;
- un module de commande (63b) associé au dit module de comparaison (63a) et configuré pour :
• commander lesdits moyens de déplacement (20) de sorte que ladite tondeuse à gazon (1) s'oriente dans une direction déterminée, par exemple sur la gauche, si ladite intensité détectée est inférieure à ladite valeur cible (Tv) ;
• commander lesdits moyens de déplacement (20) de sorte que ladite tondeuse à gazon (1) s'oriente dans une direction différente de ladite direction déterminée, par exemple sur la droite, si ladite intensité détectée est supérieure à ladite valeur cible (Tv).

12. Appareil selon la revendication 11, dans lequel ledit module de comparaison (63a) est configuré pour effectuer ladite comparaison de façon répétitive de préférence en maintenant, entre une comparaison et la suivante, un intervalle de temps compris entre 1 et 3 s.

13. Appareil selon les revendications 11 ou 12, dans lequel les orientations commandées par ledit module de commande (63b) possèdent un rayon de courbure supérieur à 0,70 mètre et/ou définissent des angles de moins de 90°.

14. Appareil selon l'une quelconque des revendications de 7 à 13, dans lequel ladite tondeuse à gazon (1) comprend de plus :
- une unité d'alimentation (70) ;
- un circuit de contrôle (71) permettant de contrôler ladite unité d'alimentation (70) et de générer un signal d'alerte (AS) lorsque la charge de ladite unité d'alimentation (70) se retrouve en dessous d'un seuil prédéterminé ; ladite unité de commande (60) étant associée au dit circuit de contrôle (71) de sorte que ledit module de calcul (62) et ledit module de fonctionnement (63) puissent s'activer en fonction dudit signal d'alerte (AS).
